# EUROPÄISCHE PATENTSCHRIFT

(11) **EP 1 396 145 B1**
(45) Veröffentlichungstag und Bekanntmachung des Hinweises auf die Patenterteilung: **20.09.2006**
(21) Anmeldenummer: 02740383.1
(22) Anmeldetag: 28.05.2002
(51) Int. Cl.: H04N 5/272

(54) **VERFAHREN ZUR DARSTELLUNG VON AUF EINER ODER MEHREREN FLÄCHEN ABGEBILDETEN INFORMATIONSINHALTEN**
METHOD FOR REPRODUCING INFORMATION, WHICH IS DISPLAYED ON ONE OR SEVERAL SURFACES
PROCEDE POUR LA REPRESENTATION DE CONTENUS D'INFORMATION REPRODUITS SUR UNE OU PLUSIEURS SURFACES

(30) Priorität: 29.05.2001 DE 10126269
(43) Veröffentlichungstag der Anmeldung: 10.03.2004
(73) Patentinhaber: Schilling, Andreas, 72810 Gomaringen (DE)
(72) Erfinder: Schilling, Andreas, 72810 Gomaringen (DE)
(74) Vertreter: Kohler Schmid Möbus
(86) Internationale Anmeldenummer: PCT/DE2002/001952
(87) Internationale Veröffentlichungsnummer: WO 2002/098129

(56) Entgegenhaltungen:
- WO-A-01/11868
- US-A- 2 727 427
- US-A- 4 847 645
- US-A- 5 946 500

## Beschreibung

Die Erfindung betrifft ein Verfahren zur Darstellung von Informationsinhalten, wie Texte, Gegenstände und/oder Bilder, auf einer oder mehreren als Projektionsfläche oder Projektionsflächen ausgebildeten Flächen, wobei die Informationsinhalte zur Aufnahme durch eine Aufnahmekamera, die Sichtkontakt zu den Flächen mit den Informationsinhalten hat, geeignet sind und wobei die Flächen mit reflektierenden Materialien beschichtet oder als reflektierende Oberflächen ausgebildet sind, auf die die zur Aufnahme bestimmten Informationsinhalte projiziert werden.

Aus dem Stand der Technik, wie zum Beispiel der Fernsehtechnik, sind Bluescreenverfahren bekannt, die beispielsweise einen Moderator, der in Wirklichkeit vor einer blauen Wand steht, vor einem beliebigen Hintergrundbild oder -film darstellen können. Weiterhin sind auch Digitalverfahren bekannt, die es erlauben, bestimmte Bild- oder Informationsinhalte einer durch eine Aufnahmekamera aufgenommenen Szene durch andere Inhalte zu ersetzen, ohne dass diese blau sein müssen. Auf diese Weise hat man beispielsweise die Möglichkeit, bei der Übertragung von Sportsendungen Bilder von Werbeflächen elektronisch durch andere Inhalte zu ersetzen, zum Beispiel durch Werbeinhalte. Darüber hinaus ist es möglich, auch an Stellen, an denen sich in der von der Aufnahmekamera abgebildeten Umgebung, wie Sportstätte, keine Werbung befindet, künstliche Werbeflächen einzublenden. In verschiedenen Ländern ist diese Art von Informationswiedergabe jedoch nicht gestattet. Um derartige Beschränkungen zu umgehen, ist es bekannt, Verfahren einzusetzen, bei denen ein inversperspektivisch verzerrtes Bild auf einer horizontal ausgerichteten Fläche, wie Boden, ausgelegt oder angebracht wird, das für eine Aufnahmekamera, die sich allerdings auf der entsprechenden Sichtlinie befinden muss, den gewünschten Informationseindruck ergibt, der sich über bekannte Mittel weiterverbreiten lässt.

Aus der US 2,727,427 ist ein Frontprojektionsverfahren zur Erzeugung eines Hinter-grundbildes für Fernsehproduktionen oder Filme bekannt geworden. Mit diesem Verfahren lassen sich Bilder in eine Fernsehproduktion oder in einen Film einfügen, die in der Natur nur mit einem großen Aufwand aufzufinden oder nachzustellen sind. Deshalb werden unter kontrollierten Beleuchtungsbedingungen in Studios Hintergrundbilder in Fernsehproduktionen und/oder Filme eingearbeitet, die beispielsweise einen Schauspieler auf einem Berg zeigen, obwohl er im Studio auf einer Bühne steht. Das bekannte Verfahren mit Strahlteiler findet nur in Studios oder in besonderen Räumen Anwendung, die für ein derartiges Verfahren ausgestattet und geeignet sind.

Aufgabe der Erfindung ist es, ein Verfahren bereitzustellen, das erweiterte Anwendungen ermöglicht.

Die Aufgabe wird erfindungsgemäß dadurch gelöst, dass die auf öffentlichen Plätzen oder in Sportstätten mit Daten- oder Videoprojektoren dargestellten und dort erfassten Informationsinhalte in Fernsehübertragungen eingebracht werden und dass die Informationsinhalte zusätzlich von Zuschauern, die Sichtkontakt zu den Flächen mit den Informationsinhalten unter einem ähnlichen Winkel wie die Aufnahmekamera haben, aufgenommen werden, wobei die Informationsinhalte aus Werbung bestehen die auf zusätzlich im Sichtbereich der Aufnahmekamera angebrachten Flächen projiziert wird.

Das erfindungsgemäße Verfahren hat den Vorteil, dass die zu übermittelnden Informationsinhalte verstärkt auf eine Aufnahmekamera oder einen Zuschauer aus einer bestimmten Richtung sichtbar gemacht werden. Die Übermittlung der gewünschten Informationsinhalte ist dadurch besonders gut zu erkennen und kann kontrastreich mit hoher Qualität, beispielsweise über Kameras übertragen und in Fernsehübertragungen eingebracht werden. Reflektierende Flächen können auf diese Flächen eingestrahltes Licht im Vergleich zu matten weißen Flächen vielfach verstärkt zurückstrahlen, zum Beispiel 1500 mal heller als es auf einer weißen Fläche erscheinen würde. Derartige Flächen als Folien werden beispielsweise unter der als Marke geschützten Kennzeichnung "Scotchlite" von der Firma 3M angeboten. Dabei können diese Folien, sofern sie auf ihrer Oberfläche dafür geeignete Mikrostrukturen oder Beschichtungen aufweisen, ein Licht beispielsweise bevorzugt in die Richtung zurückstrahlen, aus der das Licht kam, oder das auf die Mikrostrukturen oder Beschichtungen einfallende Licht wird-bei Verwendung von Strukturen mit anderen Eigenschaften bevorzugt in eine andere bestimmte Richtung reflektiert.

Auf die Projektionsfläche bzw. Projektionsflächen können nicht nur fest vorgegebene Texte, Gegenstände oder Bilder projiziert werden, sondern auch Text- oder Bildfolgen bzw. bewegte Bilder. Soll an der Stelle, an der sich eine solche reflektierende Fläche befindet, ein Bild, ein Gegenstand, ein Text oder sogar ein Film eingeblendet werden, so ist dies einfachst dadurch möglich, dass dieser Informationsinhalt von einem Daten- oder Videoprojektor, der sich - von der betreffenden Stelle aus gesehen - möglichst genau in der gleichen Richtung wie eine Aufnahmekamera befindet, auf die die für die Reflektion vorgesehene Fläche projiziert wird. Der Informationsinhalt kann mit kleiner Leistung projiziert werden, weil die für die Reflektion vorgesehene Fläche den zur Darstellung vorgesehenen Informationsinhalt im Vergleich mit normalen weißen Flächen stark verstärkt darstellt bzw. reflektiert. Dadurch, dass ein Daten- oder Videoprojektor, der den oder die Informationsinhalte auf die Flächen mit den für die gewünschte Reflektion geeigneten Strukturen projiziert, mit geringer Leistung betrieben werden kann, werden die projizierten Informationsinhalte beispielsweise auf Personen, die sich zeitweise zwischen dem Projektor und der für die Projektion vorgesehenen Fläche befinden, sehr viel dunkler erscheinen als Informationsinhalte, die auf die mit reflektierenden Strukturen versehenen Flächen gestrahlt werden. Dasselbe gilt für Gegenstände, die zeitweise in den Lichtstrahl aus einem Projektor geschoben werden, dessen Lichtstrahl auf die Fläche gerichtet ist, die für die Reflektion der zu übertragenden Informationsinhalte vorgesehen ist. In der Praxis kann es beispielsweise in Sportstätten vorkommen, dass ein Fußballspieler durch einen derartigen Lichtstrahl eines Projektors läuft. Werden beispielsweise die unter der geschützten Marke "Scotchlite" angebotenen Folien eingesetzt, so erscheint der projizierte Informationsinhalt auf dem Trikot des Fußballspielers im Bild der Aufnahmekamera um ca. 1.500 mal dunkler als die zu übertragende Information, das heißt, der Spieler erscheint im Bild ebenso, als wäre er nur von der normalen Umgebungsbeleuchtung beleuchtet. Zusätzlich wird der Spieler durch den Lichtstrahl aus dem Projektor nicht geblendet, weil dieser Projektor mit einer geringen Leistung betrieben werden kann.

Bevorzugt werden nach der Lehre des erfindungsgemäßen Verfahrens die oder mehrere Flächen durch ausgelegte Folien geschaffen, die retroreflektierende Eigenschaften aufweisen oder Licht aus einer bestimmten Richtung bevorzugt in eine bestimmte andere Richtung reflektieren.

Dies hat den Vorteil, dass derartige Flächen in öffentlichen Stätten, wie Plätzen, Sportstadien leicht geschaffen und ausgelegt werden können, beispielsweise auf einer einen Fußballrasen umgebenden Laufbahn oder neben oder unmittelbar hinter einem Tor, das normalerweise für zusätzliche Informationsübertragungsflächen nicht genutzt werden kann. Folien können auf dem das Tor umgebenden Untergrund ausgelegt werden (Rasenfläche usw.), und die über einen Projektor ausgestrahlten Informationsinhalte können nicht nur von einer mit dem Projektor synchronisierten Aufnahmekamera erfasst werden, sondern auch von Zuschauern, die Sichtkontakt zu den ausgelegten Folienflächen haben und die Projektionsfläche unter einem ähnlichen Winkel wie die Aufnahmekamera sehen.

Die Projektionsflächen zur Verwendung mit dem erfindungsgemäßen Verfahren können auch durch Beschichten oder Besprühen des vorhandenen Untergrundes mit entsprechenden Materialien geschaffen werden, wie das zum Beispiel von der Markierung von Straßen bekannt ist. Als reflektierende Materialien werden bevorzugt Mikrostrukturen, wie aneinander gereihte Prismen, schräg gestellte dreieckförmige Körper, Kugeln, kalottenförmige Körper, oder streichfähige bzw. spritzbare Materialien verwendet.

Erfindungsgemäß werden die Informationsinhalte von einem Daten- oder Videoprojektor auf die eine oder mehrere Flächen projiziert, und es ist eine Aufnahmekamera vorgesehen, die das von der einen oder mehreren Flächen die Informationsinhalte beinhaltende reflektierte Licht aufnimmt, und es sind weitere Mittel vorgesehen, die die von der Aufnahmekamera erfassten Informationsinhalte speichern, weiterverarbeiten und/oder zur weiteren visuellen Verwertung oder Bearbeitung übertragen. Der Daten- oder Videoprojektor sollte dabei so angesteuert oder synchronisiert werden, dass bei der Übertragung durch die Kamera Flimmern vermieden wird.

Dies hat den Vorteil, dass das erfindungsgemäße Verfahren mit bewährten und störungsunanfälligen Mitteln genutzt werden kann. Mit gewohnt guter Qualität können die zur Verbreitung vorgesehenen Informationsinhalte erfasst, bearbeitet und weitergeleitet werden.

Gemäß der Lehre des erfindungsgemäßen Verfahrens ist eine Aufnahmekamera bevorzugt in der unmittelbaren Umgebung positioniert, aus der die Informationsinhalte projiziert werden oder in der Nähe der Halbgeraden aufgestellt, die von einer retroreflektierenden Projektionsfläche ausgehend in Richtung zum Projektor verläuft.

Dies hat den Vorteil, dass eine auf reflektierende Flächen projizierte Information bestmöglich von der dafür vorgesehenen Aufnahmekamera erfasst werden kann, und dass kaum Abschattungen oder unerwünschte Verzerrungen auftreten.

Idealerweise stimmen Kamerastandort und Projektorposition genau überein. Ein optisch gleichwertiger Strahlengang kann durch Verwendung eines Strahlteilers erzielt werden, im Allgemeinen reicht allerdings eine Positionierung des Projektors in unmittelbarer Nähe der Kamera zur Erzielung der gewünschten Effekte aus.

In einer Weiterbildung des erfindungsgemäßen Verfahrens werden mehrere Aufnahmekameras von verschiedenen Standpunkten aus die gleiche retroreflektierende Projektionsfläche oder Projektionsflächen abbilden, wobei jeder Aufnahmekamera ein mit ihr optisch abgestimmter Projektor zugeordnet ist. Es versteht sich, dass mehreren Aufnahmekameras auch reflektierenden Projektionsflächen zugeordnet sein können, die nicht retroreflektierende Eigenschaften aufweisen, sondern einen einfallenden Lichtstrahl in eine bestimmte Richtung abgeben. Allgemein hat diese Weiterbildung des erfindungsgemäßen Verfahrens den Vorteil, dass mit derselben Projektionsfläche verschiedenste Inhalte gleichzeitig weitervermittelt bzw. an dafür vorgesehene Aufnahmekameras oder beispielsweise Zuschauergruppen in unterschiedlichen Bereichen eines Stadions weitergegeben werden können.

In einer Weiterbildung des erfindungsgemäßen Verfahrens sind die zur Projektion der Informationsinhalte vorgesehenen Mittel bevorzugt mit der oder den Aufnahmekameras fest verbunden, und bei einer Bewegung der Aufnahmekamera bzw. der Aufnahmekameras führen diese Mittel dieselben Bewegungen durch wie die Aufnahmekameras.

Dies hat den Vorteil, dass die Projektionsrichtung mit der Blickrichtung der jeweiligen Aufnahmekamera stets übereinstimmt.

Das erfindungsgemäße Verfahren mit den reflektionsfähigen Flächen wird auf öffentlichen Plätzen oder in Sportstätten eingesetzt, weil das erfindungsgemäße Verfahren es mit einfachen Mitteln zulässt, Informationsinhalte in einem großen Umfang zu verbreiten.

Die erfindungsgemäßen Projektionsflächen können eine beliebig geformte Kontur aufweisen. Bei Einsatz retroreflektierender Projektionsflächen können die zu reflektierenden Informationsinhalte unverzerrt oder mit minimalen Verzerrungen wiedergegeben werden.

Weiterhin ist das erfindungsgemäße Verfahren bevorzugt so ausgebildet, dass das zu projizierende Bild dreidimensionale Informationsinhalte darstellt.

Dies hat den Vorteil, dass mit geringstem Aufwand beispielsweise drei-dimensionale Gegenstände räumlich in einer Sportstätte so verschoben werden können, dass über das Bild der Aufnahmekamera der Eindruck vermittelt wird, der räumlich gezeigte Gegenstand würde sich unmittelbar über oder unter einer Fläche bzw. neben oder über einem Tor befinden, obwohl er nur auf eine reflektierende Fläche projiziert worden ist, die beispielsweise auf einer Laufbahn in einem Stadion ausliegt.

Allgemein ist auszuführen, dass besonders bevorzugt retroreflektierende Projektionsflächen eingesetzt werden, mit denen auf günstige Weise beliebige Inhalte dargestellt werden können, also auch drei-dimensional erscheinende Bilder von beliebig orientierten Flächen. Stimmen Position und optische Achsen von Kamera und Projektor überein, so ist es sogar möglich, Inhalte, die mit bekannten Verfahren elektronisch in eine Fernsehübertragung eingeblendet werden können, mit den gleichen Verfahren elektronisch zu erzeugen, dann aber nicht direkt in die Sendung einzublenden, sondern sie mit dem Projektor auf die retroreflektierenden Flächen zu projizieren. Auf diese Weise entsteht das gewünschte Bild bzw. der gewünschte Informationsinhalt nicht nur elektronisch für den Fernsehzuschauer, sondern er ist für jeden in der Nähe der Aufnahmekamera befindlichen Zuschauer zu beobachten. Prinzipiell funktioniert das erfindungsgemäße Verfahren auch mit nichtretroreflektiven Projektionsflächen, Nachteile der fehlenden Richtwirkung bei der Reflektion sind allerdings, dass mehr Licht aus anderen Richtungen, zum Beispiel von der Beleuchtungsanlage oder von der Sonne in Richtung Kamera gestreut wird, das den Kontrast der dargestellten Bilder verschlechtert, und dass zur Erzielung der benötigten Bildhelligkeit des gewünschten Bildes viel höhere Projektionsleistungen nötig sind. Hohe Projektionsleistungen wären nicht nur wegen des hohen Energieverbrauchs problematisch, sondern der helle Projektionsstrahl könnte auch Menschen, die sich zwischen Projektor und Projektionsfläche befinden, blenden oder irritieren und die darzustellenden Informationen würden auch auf den Menschen erscheinen.

Ein weiterer Vorteil der Verwendung retroreflektierender Projektionsflächen besteht darin, dass mehrere Projektoren aus unterschiedlichen Richtungen unterschiedliche Bilder auf die Projektionsflächen projizieren können, wobei jedes Bild nur aus der Richtung hell und kontrastreich erscheint, aus der es projiziert wurde. So können für verschiedene Aufnahmekameras, wenn sie aus genügend verschiedener Richtung auf eine solche Projektionsfläche blicken, verschiedene Bilder auf die Fläche projiziert werden, was insbesondere auch dann wichtig ist, wenn die Bilder dreidimensionale Gegenstände darstellen, die sich nicht in der Projektionsebene selbst befinden.

Anstelle retroreflektierender Projektionsflächen können auch Projektionsflächen eingesetzt werden, die Licht, das aus einer bestimmten anderen Richtung kommt, bevorzugt in Richtung zur Aufnahmekamera reflektieren. Das Bild muss dann statt aus der Kamerarichtung aus dieser anderen Richtung auf die Oberfläche projiziert werden. Dabei muss das Bild so berechnet werden, dass von der Kamera aus gesehen das gewünschte Bild zu sehen ist. Dies ist mit Standardverfahren aus der Computergrafik einfachst möglich.

Oberflächen mit der Eigenschaft, einfallendes Licht aus einer bestimmten Richtung vorzugsweise in eine bestimmte andere Richtung zu reflektieren oder sogar das von einem Punkt ausgehende Licht so zu reflektieren, dass es in einem anderen Punkt gebündelt wird, werden zum Beispiel mit Mikrostrukturtechniken erzeugt und in verschiedenen Anwendungen eingesetzt. Ein Beispiel sind Reflektionsfocuslinsen bei von oben beleuchteten Tageslichtprojektoren.

Durch die Verwendung geeigneter Mikrostrukturen können bestimmte Reflektionseigenschaften gezielt hergestellt werden. Eine so stark gerichtete Reflektion über einer Reflektionsfocuslinse eines Tageslichtprojektors wäre allerdings für das beschriebene Verwendungsprojekt problematisch, da die Linse zum Beispiel neben einem Fußballfeld sehr genau justiert sein müsste, und kleinste Abweichungen bei der Ausrichtung zu einem starken Abfall der bei der Aufnahmekamera ankommenden Lichtleistungen führen könnte. Stattdessen müsste in diesem Fall der reflektierte Strahl leicht aufgeweitet werden, was zum Beispiel durch geeignete Mikrostrukturen geschehen kann.

Es ist anzumerken, dass bei der Verwendung retroreflektierender Projektionsflächen Licht, das aus der Nähe der Aufnahmekamera kommt, zu dieser hin reflektiert wird, und deshalb aus dem Licht des Projektors, der die gewünschten Bildinhalte auf die Projektionsflächen projiziert, möglichst wenig Fremdlicht aus der Aufnahmekmerarichtung auf die Projektionsflächen fallen soll. Gegebenenfalls muss Licht, das aus Kamerarichtung zu Beleuchtungszwecken ausgestrahlt wird, durch Abschattungsvorrichtungen von den Projektionsflächen fern gehalten werden.

Für flach auf dem Boden liegende Projektionsflächen müssen Materialien mit starker Retroreflektion auch bei flachen Einfallswinkeln verwendet werden, da die Projektionsrichtung bzw. die Blickrichtung der Kamera in diesem Fall normalerweise stark von der Senkrechten abweicht (Abb. 1).

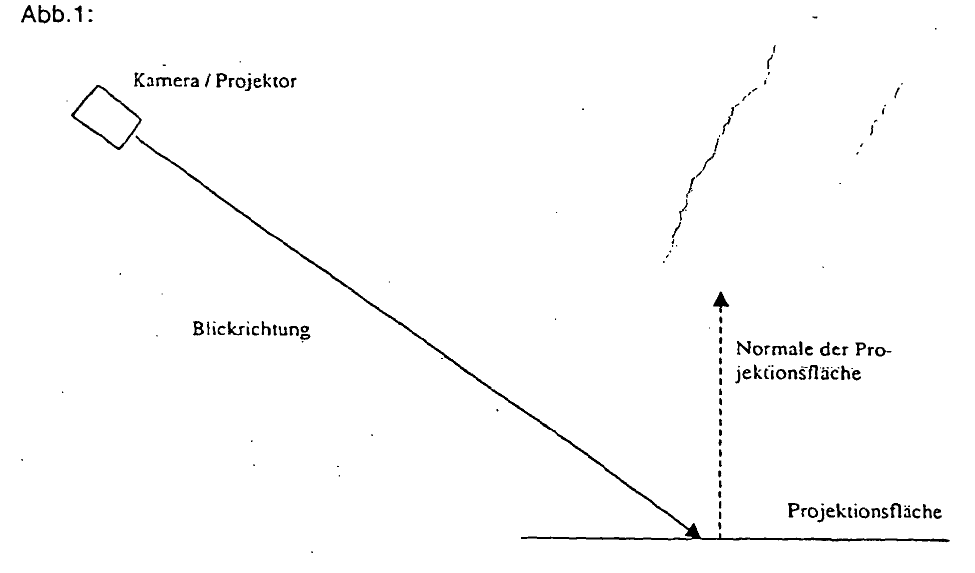

Es ist allerdings auch möglich, retroreflektierende Materialien zu verwenden, die starke Retroreflektion nur bei fast senkrechtem Einfall aufweisen. Dazu wird anstelle der ebenen Projektionsfläche eine andere, ebenfalls flache geometrische Anordnung vieler kleiner Flächen verwendet, wobei die von der Kamera bzw. dem Projektor aus sichtbaren kleinen Flächen jeweils möglichst senkrecht zur Kamera bzw. zum Projektor stehen. Dies kann z.B. durch Falten der retroreflektierenden Folie, die als Projektionsfläche verwendet wird, erreicht werden (s. Abb. 2). Bei der gezeichneten Anordnung wird deutlich, daß die so gefaltete Projektionsfläche in gleicher Weise für eine Projektion von rechts oben geeignet wäre. Andere geometrische Anordnungen mit dreiseitigen Pyramiden wären auch für die gleichzeitige Verwendung als Projektionsfläche für drei Kameras geeignet, solche Anordnungen könnten allerdings nicht durch Falten einer ebenen Folie erzielt werden. Zur Herstellung solcher aus mehreren kleinen Flächen bestehenden Projektionsflächen kann ein geeignet geformter Hartschaum oder Kunststoffträger verwendet werden, der retroreflektierend beschichtet wird, oder dessen Flächen einzeln mit retroreflektierenden Folien beklebt werden.
Solch ein Träger wird zur Stabilisierung vorteilhaft auch für durch Falten erzielte Geometrien verwendet.

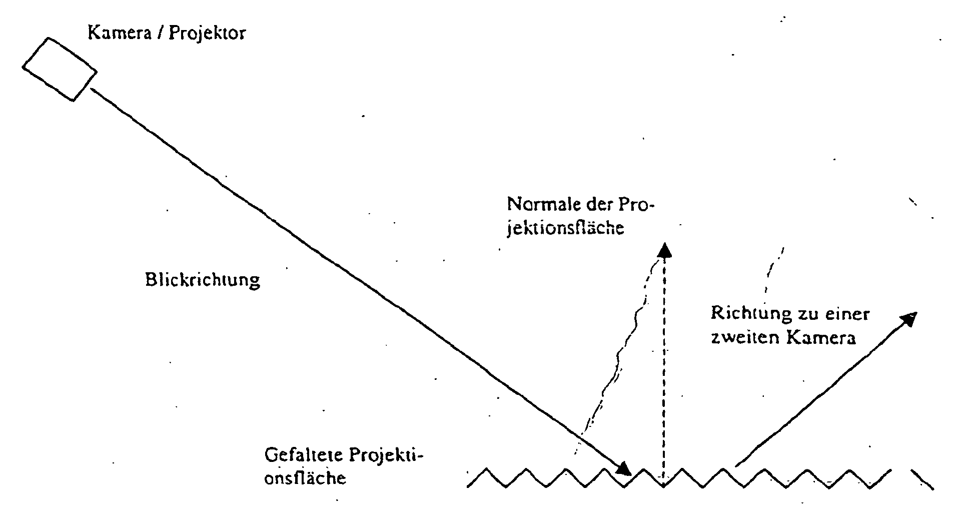

Bei einem Verfahren zur Darstellung von auf eine oder mehreren Flächen abgebildeten Informationsinhalten, wie Texte, Gegenstände und/oder Bilder, die zur Aufnahme durch eine Aufnahmekamera und durch Zuschauer geeignet sind, sind eine oder mehrere Flächen reflektierend, bevorzugt stark retroreflektierend ausgebildet, auf denen die zur Aufnahme bestimmten Informationsinhalte abgebildet werden. Mit einem Daten- oder Videoprojektor werden beliebige Informationen auf die Projektionsfläche projiziert und das reflektierte Licht, das die Informationsinhalte beinhaltet, wird von einer Aufnahmekamera erfasst und der weiteren Bildbearbeitung zw. Bildübertragung zugeführt. Mit dem erfindungsgemäßen Verfahren können einfachst auch komplexe drei-dimensionale Gegenstände so dargestellt werden, das sie zum einen auf der Projektionsfläche angeordnet erscheinen oder der Eindruck vermittelt wird, dass diese Gegenstände außerhalb der Projektionsfläche liegen. Besonders geeignet ist das erfindungsgemäße Verfahren für die Darstellung von sich schnell ändernden Informationsinhalten.

## Patentansprüche

1. Verfahren zur Darstellung von Informationsinhalten, wie Texte, Gegenstände und/oder Bilder, auf einer oder mehreren als Projektionsfläche oder Projektionsflächen ausgebildeten Flächen, wobei die Informationsinhalte zur Aufnahme durch eine Aufnahmekamera, die Sichtkontakt zu den Flächen mit den Informationsinhalten hat, geeignet sind und wobei die Flächen mit reflektierenden Materialien beschichtet oder als reflektierende Oberflächen ausgebildet sind, auf die die zur Aufnahme bestimmten Informationsinhalte projiziert werden, **dadurch gekennzeichnet, dass** die auf öffentlichen Plätzen oder in Sportstätten mit Daten- oder Videoprojektoren dargestellten und dort erfassten Informationsinhalte in Fernsehübertragungen eingebracht werden und dass die Informationsinhalte zusätzlich von Zuschauern, die Sichtkontakt zu den Flächen mit den Informationsinhalten unter einem ähnlichen Winkel wie die Aufnahmekamera haben, aufgenommen werden, wobei die Informationsinhalte aus Werbung bestehen, die auf zusätzlich im Sichtbereich der Aufnahmekamera angebrachten Flächen projiziert wird.

2. Verfahren nach Anspruch 1, **dadurch gekennzeichnet, dass** die oder mehrere Flächen durch ausgelegte Folien geschaffen werden, die retroreflektierende Eigenschaften aufweisen oder Licht aus einer bestimmten Richtung bevorzugt in eine bestimmte andere Richtung reflektieren.

3. Verfahren nach Anspruch 1 oder 2, **dadurch gekennzeichnet, dass** als reflektierende Materialien Mikrostrukturen, wie aneinander gereihte Prismen, schräg gestellte dreieckförmige Körper, Kugeln, kalottenförmige Körper oder streichfähige bzw. spritzbare Materialien verwendet werden.

4. Verfahren nach einem der Ansprüche 1 bis 3, **dadurch gekennzeichnet, dass** eine Aufnahmekamera in der unmittelbaren Umgebung positioniert ist, aus der die Informationsinhalte projiziert werden oder in der unmittelbaren Nähe der Halbgeraden aufgestellt ist, die von einer retroreflektierenden Projektionsfläche ausgehend in Richtung zur Aufnahmekamera verläuft.

5. Verfahren nach einem der Ansprüche 1 bis 4, **dadurch gekennzeichnet, dass** mehrere Aufnahmekameras von verschiedenen Standpunkten aus die gleiche retroreflektierende Projektionsfläche oder Projektionsflächen abbilden, wobei jeder Aufnahmekamera ein mit ihr optisch abgestimmter Projektor zugeordnet ist.

6. Verfahren nach einem der Ansprüche 1 bis 5, **dadurch gekennzeichnet, dass** die zur Projektion der Informationsinhalte vorgesehenen Mittel mit der oder den Aufnahmekameras fest verbunden sind und bei einer Bewegung der Aufnahmekamera bzw. Aufnahmekameras dieselbe Bewegung durchführen.

7. Verfahren nach einem der Ansprüche 1 bis 6, **dadurch gekennzeichnet, dass** die Projektionsfläche oder Projektionsflächen eine beliebig geformte Kontur aufweisen.

8. Verfahren nach einem der Ansprüche 1 bis 7, **dadurch gekennzeichnet, dass** das zu projizierende Bild dreidimensionale Informationsinhalte darstellt.

## Claims

1. Method for representing information contents such as text, objects and/or images on one or more surface(s) formed as projection surface(s), wherein the information contents are suited to be recorded by a recording camera, which is in visual contact with the surfaces with the information contents, and wherein the surfaces are coated with reflecting materials or are formed as reflecting surfaces, onto which the information contents to be recorded are projected, **characterized in that** the information contents that are represented at public locations or in sports facilities using data or video projectors and acquired there, are introduced in TV transmissions, wherein the information contents are additionally gathered by viewers being in visual contact with the surfaces with information contents at a similar angle as the recording camera, wherein the information contents consist of advertising which is projected to surfaces which are additionally mounted in the field of vision of the recording camera.

2. Method according to claim 1, **characterized in that** the surface(s) is/are produced by laid-out foils having retroreflecting properties or reflecting light from a certain direction preferably into a certain other direction.

3. Method according to claim 1 or 2, **characterized in that** microstructures, such as prisms disposed next to each other, inclined triangular bodies, spheres, dome-shaped bodies or spreadable or sprayable materials are used as reflecting materials.

4. Method according to any one of the claims 1 through 3, **characterized in that** a recording camera is positioned in the immediate vicinity from which the information contents are projected, or is positioned in the direct vicinity of the half-line which extends from a retroreflecting projection surface towards the recording camera.

5. Method according to any one of the claims 1 through 4, **characterized in that** several recording cameras image the same retroreflecting projection surface or projection surfaces from different positions, wherein each recording camera is associated with a projector which is optically matched thereto.

6. Method according to any one of the claims 1 through 5, **characterized in that** the means for projecting the information contents are rigidly connected to the recording camera(s) to perform the same motion as the recording camera(s).

7. Method according to any one of the claims 1 through 6, **characterized in that** the projecting surface(s) has/have any contour.

8. Method according to any one of the claims 1 through 7, **characterized in that** the image to be projected shows three-dimensional information contents.

## Revendications

1. Procédé d'affichage de contenus d'information, comme des textes, des objets et/ou des images, sur une ou plusieurs surfaces réalisées sous la forme de surface de projection ou de surfaces de projection, dans lequel les contenus d'information sont appropriés pour un enregistrement par une caméra d'enregistrement, qui a un contact visuel sur les surfaces avec les contenus d'information, et dans lequel les surfaces sont recouvertes de matériaux réfléchissants ou sont réalisées sous la forme de surfaces réfléchissantes, sur lesquelles les contenus d'information déterminés pour l'enregistrement sont projetés, **caractérisé en ce que** les contenus d'information affichés avec des projecteurs de données ou vidéo sur les places publiques ou dans des lieux sportifs et enregistrés à ces endroits sont introduits dans des transmissions de télévision et **en ce que** les contenus d'information sont enregistrés en plus par des téléspectateurs, qui ont un contact visuel sur les surfaces avec les contenus d'information sous un angle similaire à la caméra d'enregistrement, dans lequel les contenus d'information se composent de publicité, qui est projetée sur des surfaces disposées en plus dans la zone de vision de la caméra d'enregistrement.

2. Procédé selon la revendication 1, **caractérisé en ce que** la surface ou plusieurs surfaces sons réalisées par des feuilles exposées, qui présentent des propriétés rétroréfléchissantes ou réfléchissent la lumière provenant d'une direction déterminée de préférence dans une autre direction déterminée.

3. Procédé selon la revendication 1 ou 2, **caractérisé en ce que** des microstructures, comme des prismes alignés, des corps triangulaires positionnés obliquement, des sphères, des corps en forme de dôme ou des matériaux brossables ou injectables sont utilisés comme matériaux réfléchissants.

4. Procédé selon l'une des revendications 1 à 3, **caractérisé en ce qu'**une caméra d'enregistrement est positionnée dans l'environnement immédiat, à partir duquel les contenus d'information sont projetés ou est placée dans le voisinage immédiat du demi-espace, qui s'étend d'une surface de projection rétroréfléchissante dans la direction de la caméra d'enregistrement.

5. Procédé selon une des revendications 1 à 4, **caractérisé en ce que** plusieurs caméras d'enregistrement reproduisent à partir de différents sites la même surface ou les mêmes surfaces de projection rétroréfléchissante(s), dans lequel à chaque caméra d'enregistrement est associé un projecteur accordé optiquement avec elle.

6. Procédé selon l'une des revendications 1 à 5, **caractérisé en ce que** les moyens prévus pour la projection des contenus d'information sont reliés fixement à la ou aux caméras d'enregistrement et réalisent le même mouvement lors d'un mouvement de la caméra d'enregistrement ou des caméras d'enregistrement.

7. Procédé selon l'une des revendications 1 à 6, **caractérisé en ce que** la surface de projection ou les surfaces de projection présente(nt) un contour de forme quelconque.

8. Procédé selon l'une des revendications 1 à 7, **caractérisé en ce que** l'image à projeter affiche les contenus d'information tridimensionnels.
